(19) **Europäisches Patentamt**
**European Patent Office**
**Office européen des brevets**

(11) **EP 3 470 943 A2**

(12) **EUROPÄISCHE PATENTANMELDUNG**

(43) Veröffentlichungstag:
**17.04.2019 Patentblatt 2019/16**

(51) Int Cl.:
***G05B 19/416*** (2006.01)

(21) Anmeldenummer: **18000741.1**

(22) Anmeldetag: **18.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **19.09.2017 DE 102017008748**

(71) Anmelder: **Innolite GmbH**
**DE-52074 Aachen (DE)**

(72) Erfinder:
- **Wenzel, Christian**
  **52074 Aachen (DE)**
- **Freutel, Simon**
  **45479 Mülheim (DE)**
- **Winkelmann, Ralf**
  **52525 Heinsberg (DE)**
- **Klar, Rainer**
  **52249 Eschweiler (DE)**

(74) Vertreter: **Castell, Klaus**
**Patentanwaltskanzlei**
**Liermann-Castell**
**Am Rurufer 2**
**52349 Düren (DE)**

(54) **VERFAHREN ZUR BERECHNUNG VON FÜHRUNGSGRÖSSEN EINER PRÄZISIONSMASCHINE, ULTRAPRÄZISIONS- ODER PRÄZISIONSMASCHINE UND BAUTEIL**

(57) Die vorliegende Erfindung betrifft ein Verfahren zur Berechnung von Führungsgrößen für interpolierend fahrende Einzelachsen einer Präzisionsmaschine auf Basis einer gegebenen 3D Werkzeugbahn, bei dem zuerst für sämtliche Punkte der Werkzeugbahn offline unter Annahme einer frei gewählten Bahngeschwindigkeit oder Einzelachsgeschwindigkeit die Geschwindigkeits-, Beschleunigungs- und Ruckprofile sämtlicher interpolierenden Achsen zusammenhängend und ohne Vorgabe von Grenzwerten berechnet werden und danach auf Bereichen der 3D Werkzeugbahn Geschwindigkeits-, Beschleunigungs- oder Ruckprofile verändert werden.

EP 3 470 943 A2

## Beschreibung

Die vorliegende Erfindung betrifft ein Verfahren zur Berechnung von Führungsgrößen für interpolierend fahrende Einzelachsen einer Präzisionsmaschine auf Basis einer gegebenen 3D Werkzeugbahn, eine Ultrapräzisions- oder Präzisionsmaschine und ein mit dieser Präzisionsmaschine oder mit einem derartigen Verfahren hergestelltes Bauteil.

Insbesondere betrifft die Erfindung ein Verfahren zur Generierung und Verarbeitung von Führungsgrößen von interpolierenden Einzelachsen für eine Produktionsmaschine zur Bahnführung eines Werkzeugs, um Genauigkeits- und Produktivitätssteigerungen gegenüber dem Stand der Technik zu erzielen.

Diese Erfindung wurde bereits in der DE 10 2017 008 748.2 veröffentlicht und es wird vollinhaltlich auf diese Veröffentlichung Bezug genommen. Die vorliegende Beschreibung beschreibt das in diesem Prioritätsdokument beschriebene Verfahren in einer gegen den Stand der Technik deutlicher abgegrenzten Weise.

Produktionsmaschinen werden kontinuierlich verbessert, um stets höhere Genauigkeiten an den zu fertigenden Bauteilen zu erzielen. Neben der Genauigkeitssteigerung ist die Verbesserung der Produktivität von Interesse, die durch Automatisierung und höhere Geschwindigkeiten bei der Bearbeitung erzielt werden kann.

Einflüsse auf die Genauigkeit einer Produktionsmaschine sind mannigfaltig. Grob lassen sich die Mechanik und die Steuerungstechnik der Produktionsmaschine als Haupteinflussfaktoren benennen. Die Genauigkeit eines Bauteils, welches auf der Maschine gefertigt wird, wird weiterhin durch den Prozess beeinflusst. Hierzu gehören u.a. das verwendete Werkzeug, die eingestellten Prozessparameter sowie Umgebungseinflüsse.

Zur Genauigkeitsbetrachtung (Charakterisierung, Optimierung) bei der Mechanik gehört u.a. die Steifigkeit am Tool Center Point, die Präzision der einzelnen Achsen der Produktionsmaschine und insbesondere einer Werkzeugmaschine (linear, rotativ) beispielsweise mit Aspekten der Gradheit, des Rundlaufs, Winkelfehlern (Nicken, Rollen, Gieren), die Präzision der Lage der Einzelachsen zueinander (z.B. Rechtwinkligkeit, Parallelität) sowie das thermische Verhalten der Mechanik (thermische Symmetrie, Verlagerungen des Tool-Center-Points, etc.) Die Erfindung betrifft insbesondere Genauigkeitssteigerungen, die über mechanische Genauigkeitssteigerungen hinausgehen.

Um ein Werkzeug möglichst genau entlang einer Bahn auf einer Produktionsmaschine zu führen, ist neben der mechanischen Genauigkeit der Maschine die Steuerung inklusive der Solldatenaufbereitung und Verarbeitung von entscheidendem Einfluss. Beeinflussungen können an allen Stellen in der Kette vom CAD (Designprozess, Definition Bauteilgeometrie) über den CAD/CAM Schritt (Werkzeugbahngenerierung für das Werkzeug zur Erzeugung der Bauteilgeometrie) bis hin zur CNC (Aufteilung der Werkzeugbahn in Einzelachsverfahranweisungen) und dem Positions- und Geschwindigkeitsregelkreis (Regelung der Einzelachsen) zur Genauigkeitsreduktion führen. Im Weiteren werden die einzelnen Schritte erläutert.

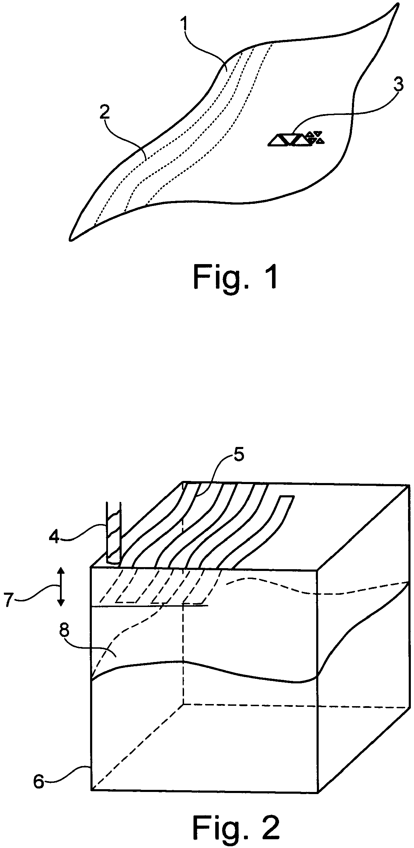

CAD (Computer Aided Design) Programme werden genutzt, um Bauteile mit zu fertigenden Oberflächen zu entwerfen. CAD Programme nutzen unterschiedliche mathematische Ansätze, um Oberflächen (1) zu beschreiben, je nach Komplexität der Oberfläche (symmetrisch, frei geformt, kontinuierlich, strukturiert) und der zu realisierenden Genauigkeit. Die Figur 1 zeigt schematisch eine Oberfläche 1, die durch Punktewolken 2 beschrieben oder als geschlossene Flächen durch Geometrieelemente approximiert werden kann. So werden beispielsweise Dreieckselemente 3 in lokal unterschiedlichen Größen (Auflösung) verwendet, um Oberflächen geschlossen zu beschreiben. Durch die Approximationen durch Flächenelemente im CAD entstehen Abweichungen zu der idealen Flächengeometrie, wie sie für das Bauteil vorgesehen ist. Diese Abweichungen ziehen sich in einem Fertigungsprozess i.d.R. bis hin zum fertigen Bauteil durch. Die Abweichungen lassen sich durch lokale Auflösungen (z.B. Schenkellänge der verwendeten Dreiecksgeometrien zur Flächenapproximation) in den Submikrometerbereich verschieben. Bei solchen Genauigkeitsanforderungen steigen die Datenmengen sowie die zugehörigen notwendigen Berechnungszeiten. Typische Formate, in denen derartige Oberflächen aus CAD Programmen exportiert und gespeichert werden sind IGES, STEP sowie native Formate (z.B. Rhino *.3dm). Konstruktionen mit CAD Programmen geschehen ausschließlich im Vorfeld zu Bearbeitungszyklen auf einer Werkzeugmaschine (offline) und sind somit für die Fertigung und die Führungsgrößenerzeugung nicht unmittelbar zeitkritisch. Bei erhöhtem Genauigkeitsbedarf kann durch eine erhöhte Auflösung mit gleichzeitig längerer Rechenzeit die Qualität positiv beeinflusst werden. Als Resultat eines CAD Programms existiert eine rein geometrische Beschreibung einer dreidimensionalen Oberfläche.

CAD/CAM (CAM: Computer Aided Manufacturing) Programme werden eingesetzt, um zur Herstellung der 3D Bauteiloberfläche (aus CAD) Bearbeitungsbahnen für definierte Werkzeuge zu berechnen. So wird beispielsweise ein gegebenes Fräswerkzeug 4 über eine mäanderförmige Rasterung 5 mehrfach über einen Werkstoffrohling 6 mit jeweiliger Zustellung 7 zwischen den einzelnen Rasterschritten geführt, um eine Oberfläche 8 am Bauteil zu generieren. Die Gestaltung dieser Werkzeugbahn hat signifikanten Einfluss auf die Genauigkeit am Bauteil. Offensichtliche Parameter sind die Tiefe der Zustellung 9, der Abstand der Bahnabschnitte zueinander 10 sowie die programmierte Werkzeuggeschwindigkeit 11 entlang der Bahn 12. All diese Parameter haben vornehmlichen Einfluss auf die Prozessführung während der Zerspanung auf der Werkzeugmaschine.

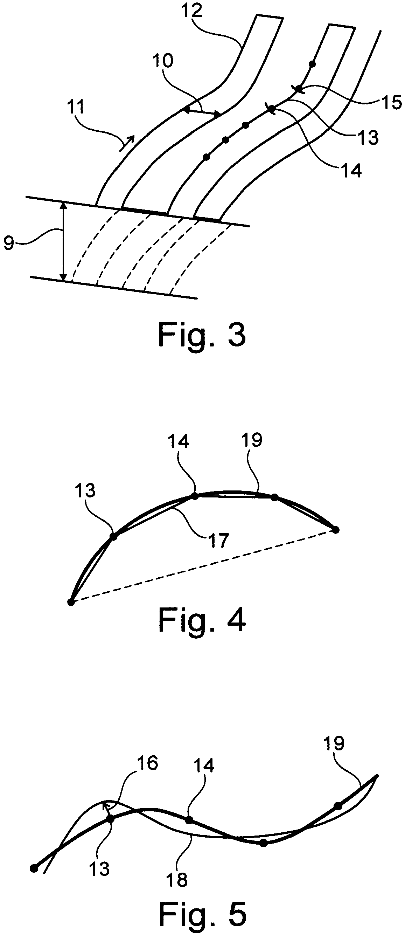

Der Abstand 13 zwischen Stützstellen 14 und 15 (nur beispielhaft beziffert) zur Beschreibung der Bahn 12 sowie die Interpolationsweise zwischen den Stützstellen 13, 14 - z.B. Linearinterpolation (vgl. Figur 4) oder Polynominterpolation (vgl. Figur 5) sind Parameter während des CAD/CAM Prozesses, die zu weiteren Abweichungen 16 der Bahn 17, 18 bei der Werkzeugführung durch die Werkzeugmaschine gegenüber der Idealgeometrie/ Idealbahn 19 führen. Eine Reduktion dieser Approximationsfehler nimmt man in der Praxis durch enge Punkteabstände (bis zu wenigen Mikrometern) und mathematisch aufwändigere Interpolationsroutinen zwischen den Punkten vor. Da auch CAD/CAM Programme offline d.h. im Vorfeld zur Bearbeitung und nahezu ohne Zeitbeschränkung laufen, lassen sich die Fehler in den einstelligen Nanometerbereich reduzieren, wenn Rechenleistung und Rechenzeit in ausreichendem Maße zur Verfügung stehen. Die Berechnungen, die vorgenommen werden, sind i.d.R. rein geometrischer Natur, die Bahn wird räumlich dreidimensional in einem definierten Koordinatensystem beschrieben.

Als Ergebnis eines CAD/CAM Rechenschrittes wird ein G-Code Programm erzeugt, welches die Werkzeugbahnen für ein zu fertigendes Bauteil in Abhängigkeit der Prozessführung und der verwendeten Werkzeugmaschine (Post-Prozessor) beschreibt. Aus dem Stand der Technik sind Ansätze bekannt, die auch maschinendynamische Aspekte bei der Bahngenerierung betrachten (z.B. NC Profiler, Aixpath). Diese Betrachtungen sind jedoch losgelöst vom eigentlichen CNC Kern, der im Sinne der NC die Interpolation und Geschwindigkeitsführung berechnet.

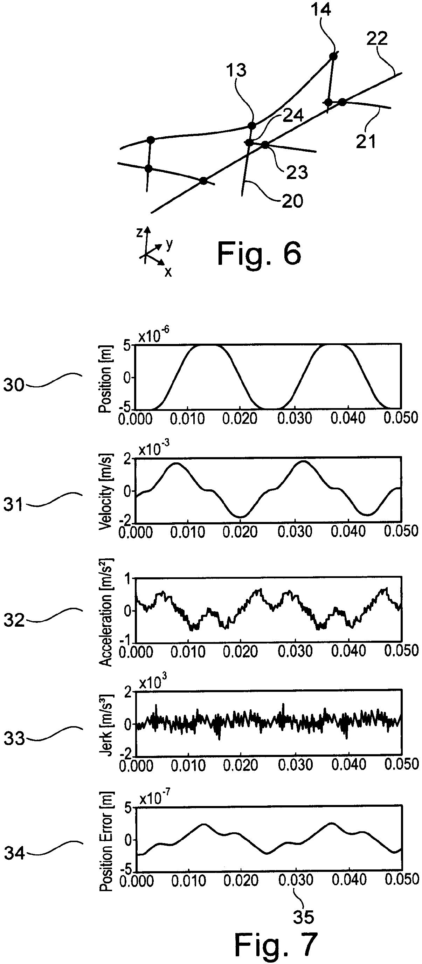

Die CNC (Computer Numerical Control) Steuerung bekommt ein G-Code Programm als Vorgabe. Dies ist eine Beschreibung einer räumlichen 3D Bahn anhand von beliebig vielen Stützstellen (Satzübergangspunkte) sowie den gewünschten Verfahrgeschwindigkeiten zwischen diesen. Anhand dessen werden durch die CNC die Bewegungsprofile (Führungsgrößen) der zur Verfügung stehenden interpolierenden Einzelachsen 20, 21 und 22, unter Berücksichtigung der maximal zulässigen Achsdynamiken (Beschleunigung, Ruck, etc.) berechnet (vgl. Figur 6, am Beispiel der x, y und z Achsen). I.d.R. wird in der Literatur hierfür der Begriff Interpolation verwendet (Manfred Weck, Werkzeugmaschinen Automatisierung von Maschinen und Anlagen, 5. Auflage S. 325).

Durch die gezielte interpolierende Bewegung der Einzelachsen soll das Werkzeug als Folge auf der räumlichen 3D Bahn (18) im Beispiel der in Figur 5 gezeigten Polynominterpolation exakt (d.h. mit Abweichungen bis zu einem zu definierenden Fehler) entlang der Stützpunkte 13, 14 geführt werden. Jeder Stützpunkt 13, 14 der 3D Bahn setzt sich zusammen aus einzelnen Achspunkten (AP), 23, 24.

Neben der rein geometrischen Betrachtung der Oberfläche im CAD bzw. CAD/CAM Prozessschritt werden im CNC Rechenzyklus örtlich als auch zeitlich synchronisierte Bewegungen der Einzelachsen bestimmt. So werden für Einzelachsen die notwendigen Positions-(s)-profile 30 (Position[m]), Geschwindigkeits-(v)-profile 31

(Velocity[m/s]), Beschleunigungs (a)-profile 32 (Acceleration [m(s2)]) und Ruckprofile (j) 33 (in [m/s3], Ruck = Ableitung der Beschleunigung) über der Zeit 35 unter Berücksichtigung der realen Leistungsfähigkeit der Werkzeugmaschine (z.B. maximale Beschleunigungen, Rücke) berechnet (vgl. Figur 7), um der 3D Bahn bestmöglich zu folgen (Formel 1).

$$SP_1 \begin{pmatrix} x \\ y \\ z \end{pmatrix} \xrightarrow[G-Code»CNC]{} \begin{array}{l} AP_{1x}\,(s, v, a, j) \\ AP_{1y}\,(s, v, a, j) \\ AP_{1z}\,(s, v, a, j) \end{array} \qquad \text{Formel 1}$$

Im einfachsten Sinne werden die einzelnen Punkte entlang der Bahn nacheinander derart angefahren, dass es an jedem Punkt zu einem vollständigen Halt des Werkzeugs kommt (Geschwindigkeit =0). Ein entsprechendes Geschwindigkeitsprofil für eine interpolierende Achse mit der jeweiligen Abweichung 34 der Position (Position Error [m]) ist in Figur 7 dargestellt. Beispielsweise für eine Fräsbearbeitung ist eine derartige Vorgabe jedoch ungünstig, da durch die permanenten Beschleunigungs- und Bremsvorgänge dynamische Unruhe in die Maschine induziert und die Gesamtbearbeitungsdauer verlängert wird. Meistens ist für eine interpolierende Bahnführung ein vollständiges Abbremsen an jeweiligen Stützpunkten nicht gewollt.

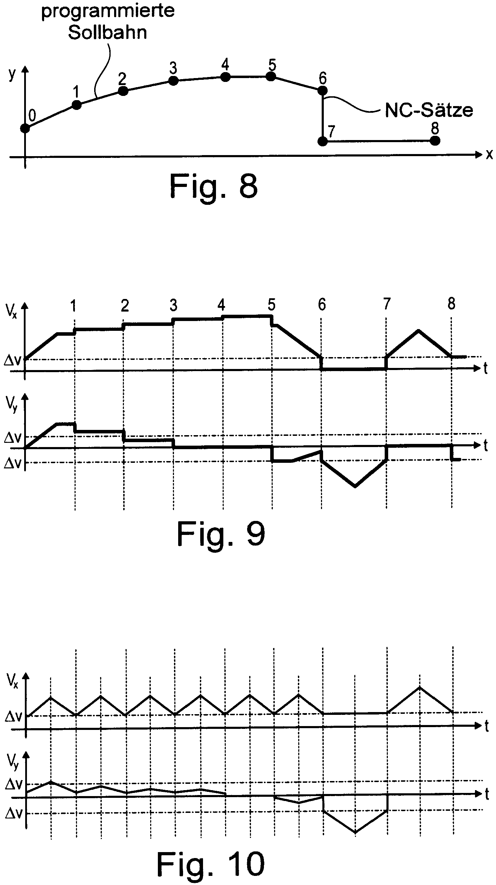

Um die Randbedingung v=0 an Stützpunkten zu umgehen, wird im Stand der Technik eine sogenannte vorausschauende Geschwindigkeitssteuerung (Look Ahead) implementiert. Die Look Ahead Funktion analysiert mehrere, i.d.R. zwischen 100 - 1.000 Sätze im Voraus, um auf Veränderungen in Richtung und Geschwindigkeit frühzeitig reagieren zu können. Durch die Look Ahead Funktion werden die dynamischen Eigenschaften der Maschine berücksichtigt. Somit kann ein vollständiger Stopp am Stützpunkt sicher umgangen werden. Als Vorgabe für die Berechnung gilt, die Bahn bei möglichst geringer Abweichung zur im G-Code angegebenen Sollgeschwindigkeit mit den zur Verfügung stehenden Einzelachsen zu durchfahren, ohne eine vorgegebene geometrische Abweichung von der Soll-Bahn (Fehler) zu überschreiten. Im Sinne der Sicherheit wird durch den Look Ahead gewährleistet, dass die Maschine jederzeit innerhalb der Satzfolge des Look- Aheads vollständig stoppen kann. Dies kann, insbesondere bei hoher Auflösung und geringem Stützpunktabstand, zu einer Reduktion der Geschwindigkeit führen. Die programmierte Sollbahn für acht Sätze zeigt die Figur 8. Ein Geschwindigkeitsprofil für die gleiche geometrische Bahn mit Look-Ahead Funktion ist in Figur 9 dargestellt und ein Geschwindigkeitsprofil für die gleiche geometrische Bahn ohne Look-Ahead Funktion zeigt die Figur 10. Hierbei ist zu beachten, dass für das Abarbeiten eines G-Code Programms (oder einer Spline-Vorgabe) für eine 3D Bahn die Parameter innerhalb der Look-Ahead Funktion konstant sind (gleiche Anzahl an Sätzen für die vorausberechnet wird, gleiche Dynamikparameter der Maschine, etc.).

Charakteristisch für alle CNC Kerne nach dem Stand der Technik ist, dass die durch einen G-Code (oder Spline) vorgegebene Bahn nicht ganzheitlich analysiert, sondern Punkt für Punkt abgearbeitet wird. Um die Zukunft vorwegzunehmen und Geschwindigkeiten, Beschleunigungen und Ruck sowie ggf. notwendige Sicherheitseingriffe (Not-Halt) planen zu können, wird ein fix parametrierter Look Ahead verwendet, der mit statischer Satzanzahl arbeitet.

Die CNC Rechenzyklen (u.a. Interpolation, vorausschauende Geschwindigkeitsführung) laufen anders als CAD bzw. CAD/CAM Schritte immer auf dem Steuerungsrechner der individuellen Maschine in Echtzeit parallel zur Bearbeitung. Somit existieren verbindliche zeitliche Limitationen, welche die Berechnungszeit für einen Sollwert gemäß Formel 1 begrenzen. Eine Präzisionssteigerung durch längere Berechnungszeiten, wie es im CAD/CAM Prozessschritt möglich ist, funktioniert nach derzeitigem Stand der Technik nicht.

Somit ergibt sich für die Genauigkeitssteigerung während der CNC Rechenzyklen eine Optimierungsaufgabe, die aus der Abstimmung folgender drei Größen besteht:

1. Anzahl der Stützpunkte zur Beschreibung der Bahn
2. Interpolationsroutinen zwischen Stützpunkten
3. Leistungsfähigkeit des Rechners (i.d.R. iPC)

Zu 1: je höher die Anzahl der Stützpunkte entlang der Bahn gewählt werden kann, desto kleiner fallen die lokalen Abweichungen zur idealen Werkzeugbahn bzw. zur idealen Bauteilgeometrie aus (Figur 4, (15)). Für eine gleiche Bahngeschwindigkeit müssen bei erhöhter Stützpunktdichte jedoch mehr Rechenoperationen gemäß Formel 1 durchgeführt werden. Es wird mehr Rechenleistung benötigt.

Zu 2: neben der Anzahl der Stützpunkte selbst, beeinflusst die Komplexität der Rechenschritte von Punkt zu Punkt die Rechenzeit. Es existieren gravierende Unterschiede in den Rechenoperationen zwischen zwei Punkten abhängig davon, ob linear oder mittels Polynom oder Spline interpoliert wird. So können bei Polynomen höherer Ordnung Geschwindigkeiten, Beschleunigungen und Rücke sauber durch lokale Ableitungen berechnet werden, die Rechenzeit für derartige Operationen ist jedoch im Vergleich zur mathematischen Limitation von Dynamikwerten bei nicht stetiger Linearinterpolation deutlich höher. Dies bedeutet, dass man eine mathematisch bessere Interpolationsalgorithmik zwischen Stützpunkten wählen kann, die zu besserem Bahnverhalten führt, diese jedoch bei gegebener Rechnerleistung zu einer Reduktion der umsetzbaren Stützpunkte oder zu einer deutlichen Reduktion der Bearbeitungsgeschwindigkeit führt

Zu 3: durch die Leistungsfähigkeit des Rechners kann der Kompromiss zwischen der Anzahl der berechneten Stützpunkte in Abhängigkeit von der Komplexität des verwendeten mathematischen Ansatzes positiv beeinflusst werden. Gängige iPCs in Maschinensteuerungen (Heidenhain, Siemens, Bosch, Fanuc) sind in der Lage, ca. 500 - 1.000 Stützpunkte pro Sekunde bei polynombasierter Interpolation zu berechnen. Bei diesem Ansatz steht guten Oberflächenrauheitswerten insbesondere bei mikrostrukturierten Geometrien eine schlechtere Formhaltigkeit entgegen. Wird die mathematisch einfachere Linearsatzinterpolation zwischen den Stützpunkten gewählt, können je nach Anzahl der interpolierenden Achsen sogar bis zu 3.000 Stützpunkte pro Sekunde berechnet werden (Beckhoff). Der hierdurch erzielten Auflösungssteigerung steht i.d.R. eine schlechtere Oberflächenrauheit entgegen, die aus verrauschten Beschleunigungs- und Ruckprofilen resultiert. Dieses Rauschen tritt als Folge der durch die Linearinterpolation verursachten, nicht stetigen Übergänge an den einzelnen Stützpunkten auf. Außerdem erlaubt die Softwarearchitektur von CNC Kernen nach derzeitigem Stand der Technik nicht die Nutzung mehrerer Kerne eines iPCs für die Berechnung. Die Leistungsfähigkeit des Rechners bezieht sich entsprechend auf das Leistungsvermögen eines Einzelkerns.

Die aus der CNC stammenden Solldaten für Achspunkte (Formel 1, rechts) werden dann an den Positions- und Geschwindigkeitsregler der Einzelachsen weitergeleitet. Diese Regelung kann auf dem Steuerungsrechner (Zentral) verortet sein (z.B. Delta Tau Steuerung, PMAC) bzw. dezentral auf dem jeweiligen Servoverstärker der Einzelachse laufen.

Für Hochpräzisions- und Ultrapräzisionsanwendungen werden oftmals zentrale Ansätze verfolgt (z.B. Moore Nanotech, USA). Der Leistungsverstärker für den Motorstrom wird dann als reiner besonders rauscharmer Linearverstärker (vgl. HIFI Verstärker) ausgeführt. Über diesen Ansatz lassen sich insbesondere gute Oberflächenrauheiten erzielen, wie sie beim Diamantdrehen gefordert werden. Beim zentralen Ansatz laufen allerdings die Positions- und Geschwindigkeitsregelkreise auf dem Steuerungsrechner (iPc) mit maximalen Taktraten von 2.000 bis 3.000 Hz. Die geometrische Genauigkeit dieser Architektur ist aufgrund der limitierten Anzahl an Stützstellen insbesondere bei mikrostrukturierten Oberflächen limitiert.

Alternativ können beim dezentralen Ansatz digitale Leistungsverstärker für die Antriebe verwendet werden. Neben den gängigen Herstellern mit Taktfrequenzen von 8 - 32 kHz existieren mittlerweile auch Hochleistungssysteme mit Positions- und Stromreglertakten von bis zu 100 kHz. Derartige Regler werden in den entsprechenden Servoverstärkern auf FPGA (Field Programmable Gate Array) betrieben. Im Hinblick auf die erzielbare Regelqualität (Schleppfehler der Einzelachse, Differenz zwischen Soll- und Ist-Positionswert) erlauben derartige Servoverstärker extreme Verbesserungen gegenüber zentralen Ansätzen (Faktor 50 höhere Anzahl an geregelten Punkten entlang der Werkzeugbahn).

Offensichtlich limitierender Faktor im Sinne einer hohen Stützpunktdichte mit mathematisch vorteilhaften (polynombasierten) Rechenansätzen ist nach derzeitigem Stand der Technik die CNC, welche auf iPCs die Berechnung der interpolierenden Einzelachsprofile auf Basis eines G-Codes (3D Bahnbeschreibung) berechnet.

Es ist daher die Aufgabe der vorliegenden Erfindung, die Präzision sowie die Produktivität von Produktionsmaschinen durch eine gegenüber dem Stand der Technik neuartige Art der Führungsgrößenerzeugung zu steigern.

Gelöst wird diese Aufgabe mit einem Verfahren mit den Merkmalen des Patentanspruchs 1, einer Ultrapräzisions- oder Präzisionsmaschine mit den Merkmalen des Patentanspruchs 17 und einem Bauteil mit den Merkmalen des Anspruchs 18. Das Verfahren erlaubt es, bei einer vorgegebenen Bauteilqualität eine optimale Bahngeschwindigkeit zu berechnen. Das heißt, der Prozess kann in Bezug auf die Bearbeitungsgeschwindigkeit und/oder die Bauteilqualität optimiert werden. Vorteilhafte Weiterbildungen der Erfindung sind jeweils Gegenstand der Unteransprüche. Insbesondere bei den Ansprüchen 6 und 7 kann das Streamen vom Steuerungsrechner der Werkzeugmaschine oder von einem externen Rechner erfolgen. Weitere Ausführungsformen ergeben sich aus der Beschreibung und den Figuren.

Im Stand der Technik beschreibt die DE10343809A1 das online Auslesen einer Tabelle zur Bestimmung von Lagesollwerten für n Folgeachsen in Abhängigkeit eines Referenzwertes einer Leitachse. Alternativ zu den Lagesollwerten der Folgeachsen können Funktionen aufgerufen werden. Es wird jedoch nicht beschrieben, wie es zur Erstellung der Lagesollwerte kommt. Es handelt sich somit offensichtlich nicht um eine offline-Berechnungsvorschrift zur analytischen und/oder numerischen Synchronisation von Achsen unter Berücksichtigung von Geschwindigkeits-, Beschleunigungs- und Ruckprofilen, um besonders gute Oberflächen unter wirtschaftlichen Bedingungen zu fertigen, wie in der vorliegenden Anmeldung beschrieben. Das neue Verfahren zielt explizit auf die Vermeidung derartiger sogenannter Look-up Tabellen.

Die Beschreibungen aus der DE10343809A1 sind u.a. aus dem Stand der Technik für Fast Tool Systeme in der Diamantzerspanung bekannt und in dem 1985 veröffentlichten Papier "Design and testing of a fast tool servo for diamond turning" von S.R Patterson und E.B.Magrab zu finden. Hier werden neben dem Auslesen einer SollWerte Tabelle in Abhängigkeit von einem Leitwert auch Interpolationsroutinen beschrieben, die für derart geschwindigkeitsbezogene nicht synchronisierte Werte vorgenommen werden müssen. Der Fachmann spricht in diesem Falle von einer Master-Slave Steuerungsarchitektur. Weitere umfangreiche Beschreibungen sind unter Manfred Weck, RWTH Aachen im Rahmen der Forschungsgesellschaft Ultrapräzisionstechnik veröffentlicht worden.

Die Zielsetzung der DE10 2008 018 962 B4 ist die verbesserte Synchronisation von mehreren Robotern im Zusammenspiel mit Zusatzgerätschaften. Neben reinen Bewegungsabläufen sollen über den beschriebenen Ansatz noch weitere roboterrelevante Funktionen synchronisiert werden können. Die Figur 2 verdeutlicht, dass die Interpolation, das heißt die Erzeugung oder Berechnung von Führungsgrößen mit Geschwindigkeits-, Beschleunigungs- und Ruckbezug online im Rahmen der konventionellen Robotersteuerung berechnet werden.

Dieses vorbekannte Patent beschreibt eine Modifikation dieser Steuerungsarchitektur insofern, als dass über einen sogenannten Bewegungstreiber der Interpolationsroutine von extern reine Positionssollwerte vorgegeben werden können, die eine höhere geometrische Qualität aufweisen und die im Vorfeld zu den Bewegungsabläufen hier einer Presse und eines zweiten Roboters erstellt worden sind. Die Werte sind "kartesische / achsspezifische Positionen im festen Takt". Aufgrund mangelhafter Grundgenauigkeit von CAD Daten bzw. mangelhafter Genauigkeit bei der Interpretation und Verarbeitung von CAD Daten durch konventionelle Robotersoftware ist der Ansatz für die Anwendungen bei Robotern sinnvoll.

Die Hauptidee des nun beanspruchten Verfahrens ist die offline Interpolation zur Erhöhung der umsetzbaren Stützpunktdichten und der Optimierung von Geschwindigkeits-, Beschleunigungs-, und Ruckprofilen für eine verbesserte Oberflächenqualität bei Zerspanungsmaschinen.

Das Lehrbuch WECK, Manfred, BRECHER, Christian Werkzeugmaschinen - Fertigungssystem, Bd. 4 beschreibt in ausführlicher Weise den Stand der Technik mit konventioneller Achsinterpolation innerhalb der CNC. Die einleitende Beschreibung der Geschwindigkeitsprofile sieht einen vollständigen Stop mit erneutem Beschleunigen an Satzpunkten vor. Für die kontinuierliche Bewegung entlang einer Bahn mit möglichst gleichmäßiger Geschwindigkeitsführung wird die vorausschauende Bahnführung (Look Ahead) beschrieben, die im Interpolationstakt und während der Bearbeitung online wirkt. Mit dem Look Ahead werden unter Berücksichtigung statischer Vorgaben von jeweils maximal positiven (Anfahrbewegung) und maximal negativen (Bremsvorgang) Achsgeschwindigkeiten, Achsbeschleunigungen und Achsrücken die Führungsgrößenprofile der Einzelachsen iterativ optimierend berechnet. Ein typischer Look Ahead umfasst die gleichzeitige Optimierung über ca. 200 Punkte. Das Lehrbuch beschreibt neben der Bahnplanung die Bedeutung des Look Ahead für sicherheitsrelevante Aspekte im Sinne einer möglichen Notbremsung bei auftretenden Grenzsituationen.

Die im eingereichten Patent beschriebene Vorgehensweise zur analytischen und oder numerischen Berechnung von Führungsgrößen ohne statische Vorgaben im Vorfeld zur eigentlichen Bearbeitung (offline) wird in keiner Weise erwähnt.

Bei dem nun beschriebenen Vorgehen geht es nicht um einen Optimierungsschritt während der CAD /CAM Routine sondern es geht um die tatsächliche Funktionalität der CNC. Die berechneten Daten werden vorzugsweise nicht mehr durch einen weiteren CNC Kern geschoben, sondern fließen direkt auf den Positionsregler der Einzelachse.

Über den Lock-Ahead in einer konventionellen CNC Steuerung wird eine Geschwindigkeitsplanung für die Führung des Werkzeugs derart vorgenommen, dass ein möglichst schnelles Folgen der Bahn, unter Berücksichtigung der vorgegebenen Sollgeschwindigkeit, realisiert wird, ohne dass dabei die Kontur (Geometrie) verletzt wird.

Beschleunigung und Ruck werden für die Geschwindigkeitsplanung als Resultat berechnet. Gibt es Überschreitungen von vorab definierten Grenzwerten bei Beschleunigung oder Ruck, wird die Geschwindigkeit an den jeweiligen Stellen reduziert, bis die zulässigen Grenzwerte unterschritten werden.

Das hat zur Folge, dass über der gesamten Bahn die Grenzwerte von Geschwindigkeit, Beschleunigung oder Ruck niemals überschritten werden. Es kann jedoch sein, dass der Verlauf der Beschleunigung und des Rucks sehr ungleichmäßig bzw. verrauscht ist. Dies führt zu dynamischen unerwünschten Anregungen in der Maschine, die zu einer Verschlechterung der Oberflächengüte führen.

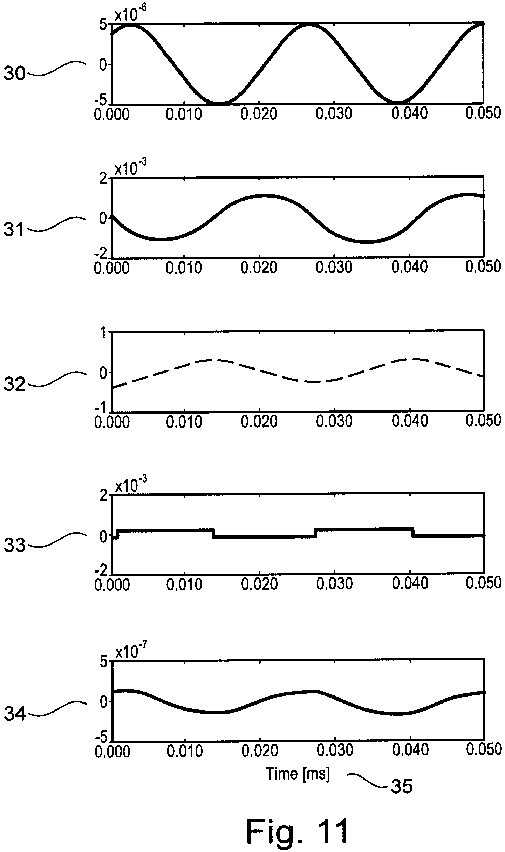

In den Figuren 7 und 11 sind die Führungsgrößen für eine einfache Bewegung einer Achse zwischen zwei Punkten dargestellt. In der Figur 7 wurde konventionell über CNC Linearsatz berechnet und in der Figur 11 über den erfindungsgemäßen polynombasierten Offline Ansatz. Dabei fallen insbesondere die Unterschiede bei Beschleunigung und Ruck auf.

Dies ermöglicht es, bei Bedarf (es kann viele Gründe für eine höher frequente Anregung geben, z.B. Oberflächenstruktur, Grenzbewegungsfälle der Achsen, Zerspanung besonderer Materialien) für die Geschwindigkeit, Beschleunigung und Ruck optional neue Glättungsfunktionen einzuführen, die nicht nur lokal einen Grenzwert kontrollieren und reduzieren (und dadurch zu hochfrequenter Anregung führen), sondern eine kontinuierliche Glättung und folglich eine Beruhigung der Werkzeugführung über einem Teilsegment der Bahn erzielen. Aus einer derartigen Glättungsfunktion resultiert eine Beeinflussung bzw. Reduktion der Geschwindigkeit in dem jeweiligen Bereich.

In der Praxis kann das Verfahren in drei Schritten beschrieben werden:

1. Berechnen sämtlicher Führungsgrößen mit zeitlichem Bezug (Geschwindigkeit, Beschleunigung, Ruck) für die Einzelachsen auf Basis einer Startgeschwindigkeit.

2. Anpassen dieser berechneten Führungsgrößen lokal entlang der ganzen 3D Bahn derart, dass ein vorgegebener Maximalwerte für Geschwindigkeit, Beschleunigung, Ruck nicht überschritten wird.

3. Glätten der angepassten Führungsgrößenprofile für Geschwindigkeit, Beschleunigung und Ruck entlang von Teilstücken je nach vorgegebener Anforderung, wie beispielsweise kurze Bearbeitungszeit (glatter, maximierter Geschwindigkeitsverlauf) oder gute Oberflächenrauheit (Glättung des Beschleunigungsprofils der Achsen für sanftes Verfahren). Hierbei hat die Glättung eines beliebigen Führungsgrößenprofils (z.B. Beschleunigung) stets Einfluss auf alle anderen Profile (z.B. Ruck, Geschwindigkeit).

Dies ermöglicht es, die Bearbeitungsgeschwindigkeit deutlich zu steigern sowie die Qualität der Bearbeitung durch eine erhöhte Anzahl von Stützstellen pro Sekunde zu erhöhen. Dies wird für Präzisionsmaschinen und insbesondere für hochpräzise Werkzeugmaschinen benötigt, um beispielsweise Strukturen für Headup-Displays deutlich schneller fertigen zu können.

Neu gegenüber dem Stand der Technik ist auch die Möglichkeit, mit dem Verfahren eine kontinuierliche Anpassung der Spindeldrehzahl bis zu einem Maximalwert vorzunehmen, ohne dass es eine Oberflächenqualitätsbeeinflussung gibt.

**Patentansprüche**

1. Verfahren zur Berechnung von Führungsgrößen für interpolierend fahrende Einzelachsen einer Präzisionsmaschine auf Basis einer gegebenen 3D Werkzeugbahn, *dadurch gekennzeichnet, dass* zuerst für sämtliche Punkte der Werkzeugbahn offline unter Annahme einer frei gewählten Bahngeschwindigkeit oder Einzelachsgeschwindigkeit die Geschwindigkeits-, Beschleunigungs- und Ruckprofile sämtlicher interpolierenden Achsen zusammenhängend und ohne Vorgabe von Grenzwerten berechnet werden und danach auf Bereichen der 3D Werkzeugbahn Geschwindigkeits-, Beschleunigungs- oder Ruckprofile verändert werden.

2. Verfahren nach Anspruch 1, *dadurch gekennzeichnet, dass* als Bahngeschwindigkeit die Geschwindigkeit der Projektion des Werkzeuges auf eine Ebene verwendet wird.

3. Verfahren nach Anspruch 1 oder 2, *dadurch gekennzeichnet, dass* die Berechnung für ein Teilstück einer 3D Werkzeugbahn durchgeführt wird und aus Teilstückberechnungen zusammengesetzt wird.

**4.** Verfahren nach einem der vorhergehenden Ansprüche, *dadurch gekennzeichnet, dass* als Schnittstellenausgabe der Berechnungsvorschrift für die Steuerung der Präzisionsmaschine Positionssollwerte als Führungsgröße für jede interpolierend fahrende Einzelachse der Präzisionsmaschine mit äquitemporalen Abständen in einer zusammenhängenden oder mehreren Einzeldateien ausgegeben werden.

**5.** Verfahren nach einem der vorhergehenden Ansprüche, *dadurch gekennzeichnet, dass* durch eine analytische und oder numerische Berechnung eine Anzahl der Positionssollwerte pro Einzelachse größer 3.000 Pkt/s, vorzugsweise größer 5.000 Pkt/s oder sogar größer 10.000 Pkt/s bei polynombasierter Berechnung ausgegeben werden.

**6.** Verfahren nach einem der vorhergehenden Ansprüche, *dadurch gekennzeichnet, dass* die Bewegungsprofile vor dem Ansteuern der Einzelachsen in Dateien als Puffer gespeichert werden, die mit Datenraten größer 3.000 Pkt/s, vorteilhaft größer 5.000 Pkt/s oder sogar größer 10.000 Pkt/s direkt an einen Servo zum Ansteuern einer Einzelachse mit dezentraler integrierter Positionsregelung gestreamt werden.

**7.** Verfahren nach einem der vorhergehenden Ansprüche, *dadurch gekennzeichnet, dass* die Bewegungsprofile vor dem Ansteuern der Einzelachsen in Dateien als Puffer gespeichert werden, die mit Datenraten größer 3.000 Pkt/s, vorteilhaft größer 5.000 Pkt/s oder sogar größer 10.000 Pkt/s direkt an einen Lageregler, der zentral auf einem Rechner der Präzisionsmaschine läuft, gestreamt werden.

**8.** Verfahren nach Anspruch 6 oder 7, *dadurch gekennzeichnet, dass* beim Streamen der vorberechneten Werte die Bahngeschwindigkeit des Werkzeugs durch ein limitierendes Stellglied (Override) beeinflusst wird.

**9.** Verfahren nach einem der Ansprüche 6 bis 8, *dadurch gekennzeichnet, dass* die Dateien aus einem konventionellen CNC Programm der Präzisionsmaschine als Unterprogramm aufgerufen, gestartet und beendet werden.

**10.** Verfahren nach einem der vorhergehenden Ansprüche, *dadurch gekennzeichnet, dass* als Schnittstellenausgabe neben den Positionssollwerten der Einzelachsen, Geschwindigkeits-, Beschleunigungs- oder Ruckwerte mit äquitemporalen Abständen als ergänzende Führungsgrößen für die Einzelachssteuerung ausgegeben werden.

**11.** Verfahren nach einem der vorhergehenden Ansprüche, *dadurch gekennzeichnet, dass* die Berechnung der Führungsgrößen für die interpolierenden Einzelachsen derart vorgenommen wird, dass die Drehzahl einer im Achsverbund vorhandenen Hauptspindel kontinuierlich bis zu einem definierten Maximalwert gesteigert wird, um eine konstante Schnittgeschwindigkeit längst möglich im Drehbearbeitungsprozess zu gewährleisten.

**12.** Verfahren nach einem der vorhergehenden Ansprüche, *dadurch gekennzeichnet, dass* eine Startgeschwindigkeit für alle Einzelachsen entlang einer vollständigen 3D Bahn oder einen Teilverbund der Einzelachsen bei einer Teilprojektion der 3D Bahn vorgegeben wird und vor dem Ansteuern der Einzelachsen die anderen Führungsgrößen der Einzelachsen mit zeitlichem Bezug wie Geschwindigkeit, Beschleunigung und/oder Ruck vollständig berechnet werden.

**13.** Verfahren nach Anspruch 12, *dadurch gekennzeichnet, dass* nach erfolgter Berechnung der Führungsgrößen auf Basis der Startgeschwindigkeit die Führungsgrößen Geschwindigkeit, Beschleunigung und Ruck unter Berücksichtigung vorgegebener Dynamikgrenzwerte lokal entlang der gesamten 3D Bahn maximiert werden.

**14.** Verfahren nach Anspruch 13, *dadurch gekennzeichnet, dass* nach erfolgter lokaler Maximierung der Führungsgrößen Geschwindigkeit, Beschleunigung und Ruck die jeweiligen Führungsgrößenprofile insbesondere Beschleunigung und Ruck über individuellen Teilsegmenten der Bahn geglättet werden, um auf diesen Teilsegmenten eine Präzisionssteigerung insbesondere in Bezug auf Formhaltigkeit oder Oberflächenrauheit zu erzielen.

**15.** Verfahren nach einem der vorhergehenden Verfahrensansprüche, *dadurch gekennzeichnet, dass* vor dem Ansteuern der Einzelachsen ein vollständiger Führungsgrößendatensatz analytisch präzise für die gesamte 3D Raumkurve oder Teilabschnitte der Kurve berechnet und optimiert wird.

**16.** Verfahren nach Anspruch 15, *dadurch gekennzeichnet, dass* für die Erstellung des Führungsgrößendatensatzes iterative, numerische Berechnungen oder analytisch präzise Berechnungen für die Interpolation parallel auf mehreren Kernen durchgeführt und anschließend synchronisiert zusammengesetzt werden, um eine Beschleunigung der Erstellung gegenüber Einzelkernberechnungen zu erzielen.

**17.** Ultrapräzisions- oder Präzisionsmaschine mit einer steuerungs- oder antriebsservoseitigen Schnittstelle, um nach Anspruch 1 im Vorfeld zur Bearbeitung berechnete Dateien mit äquitemporalen Führungsgrößen für interpolierende Einzelachsen der Präzisionsmaschine einzulesen und an die Positions- und/oder Geschwindigkeitsregler der jeweiligen Einzelachsen streamen zu können.

**18.** Bauteil, hergestellt mit einer Präzisionsmaschine oder einem Verfahren nach einem der vorhergehenden Ansprüche.

Fig. 1

Fig. 2

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

**In der Beschreibung aufgeführte Patentdokumente**

- DE 102017008748
- DE 10343809 A1
- DE 102008018962 B4